# EUROPÄISCHE PATENTSCHRIFT

(11) **EP 0 525 440 B1**
(45) Veröffentlichungstag und Bekanntmachung des Hinweises auf die Patenterteilung: **30.11.1994**
(21) Anmeldenummer: 92111352.8
(22) Anmeldetag: 03.07.1992
(51) Int. Cl.: B65G 61/00, B28B 13/04, B28B 17/00

(54) **Hubsteuerung eines Stapelgreiferkopfes für Steinformlinge**
Stroke control device for an apparatus for damping and stacking moulded blocks
Système de commande de la course d'un dispositif de préhension et d'empilage de blocs moulés

(30) Priorität: 19.07.1991 DE 4123952
(43) Veröffentlichungstag der Anmeldung: 03.02.1993
(73) Patentinhaber: LANGENSTEIN & SCHEMANN GMBH, D-96450 Coburg (DE)
(72) Erfinder: Rüger, Herbert, Dipl.-Ing., W-8621 Schneckenlohe-Beickheim (DE)
(74) Vertreter: Böhme, Volker, Dipl.-Ing.

(56) Entgegenhaltungen:
- GB-A- 1 002 387
- US-A- 3 545 053
- US-A- 3 850 313
- US-A- 3 884 363

## Beschreibung

Die Erfindung betrifft eine Hubsteuerung eines Stapelgreiferkopfes für Steinformlinge, bei der eine Formpresse mit einem in einer Preßform Steinformlinge einer Lage pressenden Stößel vorgesehen ist, bei der der Stapelgreiferkopf mittels eines Hubantriebs geführt auf- und abfahrbar höhenverstellbar ist, bei der zum Stapeln auf einer Stapelplattform eine Lage von Steinformlingen auf die andere gelegt wird und der Abwärtshub des Stapelgreiferkopfes bei jeder Lage um eine Lagendicke geringer ist, und bei der im Hinblick auf die jeweilige Stapelhöhe eine Meßeinrichtung vorgesehen ist.

Bei einer durch die Praxis bekannten Hubsteuerung dieser Art ist an dem Stapelgreiferkopf eine abwärtstragende Tastmeßeinrichtung vorgesehen, die beim Auftreffen auf die oberste Stapellage von Steinformlingen den sich abwärtsbewegenden Stapelgreiferkopf stillsetzt. Die auf noch weiche, grüne Steinformlinge auftreffende Tastmeßeinrichtung kann die Steinformlinge beschädigen. Da die Tastmeßeinrichtung genau vertikal abwärts bewegt werden muß, kann sich der Stapelgreiferkopf nicht schräg, d. h. nicht in Überlagerung einer horizontalen und einer vertikalen Bewegung, zu seiner jeweiligen Entladeposition abwärts bewegen. Wenn man die Tastmeßeinrichtung nicht übermäßig lang machen will, dann bleibt wenig Zeit, um den Stapelgreiferkopf aus der Abwärtsfahrt stillzusetzen. Um einen getriebenen Überlauf zu verhindern, ist daher der Stapelgreiferkopf an der Aufhängeeinrichtung mit vertikalem Spiel angebracht, was der Vorrichtung eine gewisse Instabilität gibt.

Eine Aufgabe der Erfindung ist es daher, eine Hubsteuerung der eingangs genannten Art zu schaffen, bei der eine Tastmeßeinrichtung vermieden und eine von der Bewegung des Stapelgreiferkopfes unabhängige Messung der tatsächlichen Stapelhöhe vorgesehen ist.

Die erfindungsgemäße Hubsteuerung ist, diese Aufgabe lösend, **dadurch gekennzeichnet,** daß ein Rechner die einander folgenden Lagendicken zu einer jeweiligen Stapelhöhe aufaddiert und für jede abzulegende Lage eine Höheneinstellung des Stapelgreiferkopfes entsprechend der aufaddierten Stapelhöhe steuert, und daß eine Wegmeßeinrichtung dem pressenden Stößel für die Messung der jeweiligen Lagendicke zugeordnet vorgesehen ist und eine Zuführung der gemessenen Lagendicken zum Rechner vorgesehen ist, so daß die aufaddierte Stapelhöhe gemessen ist.

Es wird die Höhe bzw. Dicke der Steinformlinge bei jedem Preßhub der Formpresse gemessen. Der Rechner ermittelt aufgrund der gemessenen Dicken die tatsächliche Höhe des jeweiligen Stapels. Diese Höhe dient zur Ermittlung der Zielposition des Stapelgreiferkopfes, der auch dann, wenn sich negative oder positive Toleranzen der Steinformlinge aufaddiert haben sollten, so dicht an den Stapel heranfahrbar ist, daß nur eine kleine freie Fallstrecke vorhanden ist. Beschädigungen von Steinformlingen durch freien Fall über eine größere Strecke bei negativen Dickentoleranzen sind vermieden. Es wird, wenn auch indirekt, die tatsächliche Stapelhöhe gemessen und zur Steuerung des Anhaltens des sich abwärts bewegenden Stapelgreiferkopfes verwendet. Der Stapelgreiferkopf ist an der Aufhängevorrichtung in vertikaler Richtung frei von axialem Spiel angebracht. Die Erfindung wird primär in Verbindung mit der Kalksandsteinherstellung verwendet, bei der eine Mischung von Sand, Kalk und Wasser zum Steinformling gepreßt wird.

Bei einer theoretisch denkkbaren Hubsteuerung wird dem Rechner die theoretische Lagendicke der in der Formpresse jeweils zu erzeugenden Steinformlinge eingegeben, so daß die jeweils aufaddierte Stapelhöhe errechnet ist. Die Steinformlinge sind in ihrer Höhe bzw. Lagendicke nicht frei von Toleranzen, die im wesentlichen von der Qualität des Sand-Kalk-Wassergemisches anhängen. Die Toleranzen können sich auch für eine längere Zeitspanne, d. h. über eine Vielzahl einander folgender Steinformling-Lagen hin, an der positiven oder an der negativen Toleranzgrenze bewegen. Beim Stapeln der Steinformlinge in mehreren Lagen auf einem Härtewagen addieren sich auch die Toleranzen. Wenn sich positive Toleranzen addieren, ist die tatsächliche Stapelhöhe größer als die errechnete Stapelhöhe. Da sichergestellt sein muß, daß der Stapelgreiferkopf beim Ablegen einer Lage keine Kraft auf die schon gestapelten Steinformlinge ausübt, muß der Stapelgreiferkopf bereits an einer Position stoppen, welche sich aus der errechneten Stapelhöhe und der Summe der maximal möglichen positiven Toleranzen ergibt. Wenn nun die gestapelten Steinformlinge die maximal mögliche negative Toleranz haben, so befindet sich zwischen der Unterkante der von dem gestoppten Stapelgreiferkopf gehaltenen Steinformlinge und der Oberkante der Steinformlinge der oberen Stapellage eine größere freie Strecke. Der freie Fall der vom Stapelgreiferkopf freigegebenen Steinformlinge über diese größere freie Strecke kann zu Beschädigungen der noch feuchten bzw. grünen Steinformlinge führen. Dieser Nachteil der theoretisch denkbaren Hubsteuerung ist bei der erfindungsgemäßen Hubsteuerung vermieden.

Wenn verschiedene gleichartige Stapelplattformen nacheinander unter den Stapelgreiferkopf fahrbar sind, ist es besonders zweckmäßig und vorteilhaft, wenn eine Höhenmeßeinrichtung für die Oberseite der Stapelplattformen vorgesehen und mit dem Rechner verbunden ist und die Rechner-Steuerung in Abhängigkeit von der Summe der gemessenen Lagendicken und der gemessenen Plattformhöhen vorgesehen ist. Es sind die Plattformhöhen der Stapelplattformen trotz deren Gleichartigkeit häufig verschieden. Es werden beim Positionieren des Stapelgreiferkopfes auch die wechselnden Plattformhöhen der zum Einsatz kommenden Stapelplattformen berücksichtigt.

Besonders zweckmäßig und vorteilhaft ist es, wenn eine Bewegung des Stapelgreiferkopfes in vertikaler Richtung über den Stapel vorgesehen ist und wenn die Abwärtsbewegung und die vertikale Bewegung zu einer schräg abwärts verlaufenden Bewegung überlagert sind. Durch diese Art von Senkbewegung des Stapelgreiferkopfes wird die Arbeitsgeschwindigkeit der Gesamtanlage vergrößert.

In der Regel vergeht eine gewisse Zeit zwischen der Messung der in der Formpresse erzeugten Lagendicke und dem Absenken des diese Lage haltenden Stapelgreiferkopfes. Deshalb ist in dem Rechner ein Schieberegister vorgesehen, das jede gemessene Lagendicke entsprechend verzögert der Aufaddierung zuführt. Es läßt sich auch zwischen der Formpresse und dem Stapelgerät ein Förderband vorsehen. Das Schieberegister ist der Zahl der nacheinander aufgereihten Steinformlinge angepaßt, so daß stets diejenige Lagendicke zum Aufaddieren kommt, die der Steinformling-Lage vorhergeht, die vom Stapelgreiferkopf gerade abgesetzt werden soll.

Besonders zweckmäßig und vorteilhaft ist es, wenn dem Stapelgreiferkopf eine Wegmeßeinrichtung zugeordnet ist und der Hubantrieb mit einem Abgleich des von der Wegmeßeinrichtung gemessenen Istwertes mit dem vom Rechner angegebenen Sollwert vorgesehen ist. Der Hubantrieb ist also als Servoantrieb ausgebildet, so daß sichergestellt ist, daß der Stapelgreiferkopf mit Sicherheit stets auf die gemessene aufaddierte Stapelhöhe eingestellt wird.

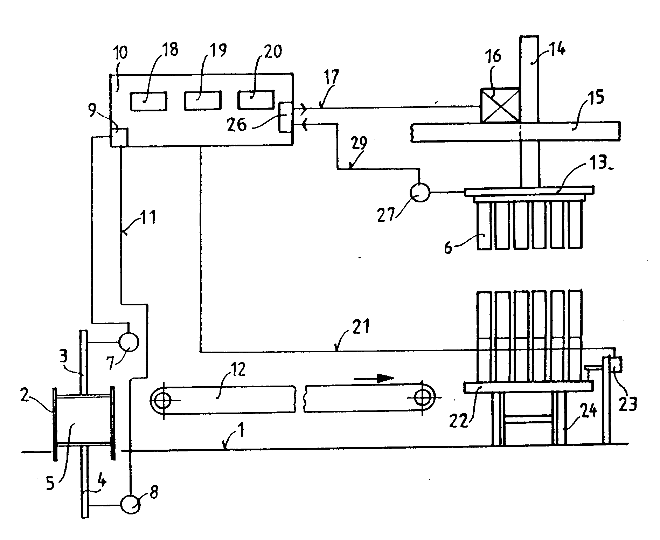

In der Zeichnung ist eine bevorzugte Ausführungsform der Erfindung dargestellt und zwar schematisch eine Hubsteuerung eines Stapelgreiferkopfes für Steinformlinge.

Die Hubsteuerung gemäß Zeichnung berücksichtigt eine nicht näher gezeigte Formpresse, die auf einem Untergrund 1 steht und eine Preßform 2 umfaßt, zu der ein oberer Stempel 3 und ein unterer Stempel 4 gehören, die zwischen sich eine Lage 5 von Steinformlingen 6 pressen. Jedem Stempel 3, 4 ist eine Wegmeßeinrichtung 7, 8 zugeordnet, die beide über Meßleitungen 11 auf ein Vergleichsglied 9 eines Rechners 10 arbeiten, das die Dicke der jeweils gepreßten Lage angibt. Es ist ein nicht näher gezeigtes Entladegerät vorgesehen, das einen vertikal und horizontal verfahrbaren Entladegreiferkopf aufweist und die gepreßten Steinformlinge aus der Preßform 2 auf ein Zwischentransport-Förderband 12 entlädt, das die Steinformlinge gruppenweise zu einem Stapelgerät bringt. Das Stapelgerät umfaßt einen mit Greifern versehenen Stapelgreiferkopf 13, der an einer Aufhängeeinrichtung 14 vorgesehen ist und an einem Gestell 15 auf- und abverfahrbar ist. Hierzu ist ein Hubantrieb 16 vorgesehen, der vom Rechner 10 her über eine Steuerleitung 17 angesteuert wird. Der Rechner 10 enthält nach dem Vergleichsglied 9 ein Schieberegister 18, ein Addierglied 19 und ein Steuersignalglied 20. Dem Addierglied 19 wird über eine Meßleitung 21 auch die jeweils gemessene Höhe einer Stapelplattform 22 zugeführt, die unter dem Gestell 15 bzw. dem sich absenkenden Stapelgreiferkopf 13 steht. Dort steht eine Höhenmeßeinrichtung 23, die zu der leeren Stapelplattform 22 hingeschwenkt und nach dem Messen wieder weggeschwenkt wird. Die Stapelplattform 22 ist auf Rädern 24 verfahrbar. Dem Stapelgreiferkopf 13 sind der Hubantrieb 16, eine Wegmeßeinrichtung 27 und ein im Rechner 10 vorgesehener Abgleich 26 zugeordnet. Der Rechner 10 arbeitet über die Steuerleitung 17 auf den Hubantrieb 16 und die Wegmeßeinrichtung 27 arbeitet über eine Meßleitung 29 auf den Abgleich 26 des Rechners 10.

Der Hubantrieb 16 ist ein Elektromotor, der über eine gegliederte Stellstange wie eine Spindel oder eine Zahnstange am Stapelgreiferkopf 13 angreift. Dies verbessert die Genauigkeit, mit der sich der Stapelgreiferkopf auf eine bestimmte Position einfahren läßt.

## Patentansprüche

1. Hubsteuerung eines Stapelgreiferkopfes (13) für Steinformlinge (6), bei der eine Formpresse mit einem in einer Preßform (2) Steinformlinge (6) einer Lage (5) pressenden Stößel (3) vorgesehen ist, bei der der Stapelgreiferkopf (13) mittels eines Hubantriebs (16) geführt auf- und abfahrbar höhenverstellbar ist,
bei der zum Stapeln auf einer Stapelplattform (22) eine Lage von Steinformlingen (6) auf die andere gelegt wird und der Abwärtshub des Stapelgreiferkopfes (13) bei jeder Lage um eine Lagendicke geringer ist, und
bei der im Hinblick auf die jeweilige Stapelhöhe eine Meßeinrichtung (7, 8) vorgesehen ist,
**dadurch gekennzeichnet,**
daß ein Rechner (10) die einander folgenden Lagendicken zu einer jeweiligen Stapelhöhe aufaddiert und für jede abzulegende Lage (5) eine Höheneinstellung des Stapelgreiferkopfes (13) entsprechend der aufaddierten Stapelhöhe steuert, und
daß eine Wegmeßeinrichtung (7, 8) dem pressenden Stößel (3, 4) für die Messung der jeweiligen Lagendicke zugeordnet vorgesehen ist und eine Zuführung (11) der gemessenen Lagendicken zum Rechner (10) vorgesehen ist, so daß die aufaddierte Stapelhöhe gemessen ist.

2. Hubsteuerung nach Anspruch 1, wobei verschiedene gleichartige Stapelplattformen nacheinander unter den Stapelgreiferkopf fahrbar sind, **dadurch gekennzeichnet,** daß eine Höhenmeßeinrichtung (23) für die Oberseite der Stapelplattform (22) vorgesehen und mit dem Rechner (10) verbunden ist, und die Rechner-Steuerung (28) in Abhängigkeit von der Summe der gemessenen Lagendicken und der gemessenen Plattformhöhe vorgesehen ist.

3. Hubsteuerung nach Anspruch 1 oder 2, wobei eine Bewegung des Stapelgreiferkopfes in vertikaler Richtung über dem Stapel vorgesehen ist, **dadurch gekennzeichnet,** daß die Abwärtsbewegung und die vertikale Bewegung zu einer schräg abwärts verlaufenden Bewegung überlagert sind.

4. Hubsteuerung nach Anspruch 1, 2 oder 3, **dadurch gekennzeichnet,** daß dem Stapelgreiferkopf (13) eine zweite Wegmeßeinrichtung (27) zugeordnet ist und der Hubantrieb (16) mit einem Abgleich (26) des von der zweiten Wegmeßeinrichtung (27) gemessenen Istwertes mit dem vom Rechner (10) angegebenen Sollwert versehen ist.

5. Hubsteuerung nach einem der vorhergehenden Ansprüche, **dadurch gekennzeichnet,** daß der Hubantrieb (16) ein Elektromotor ist, der über eine gegliederte Stellstange wie Spindel oder Zahnstange am Stapelgreiferkopf (13) angreift.

## Claims

1. A stroke control device of a stacker grab head (13) for stone briquettes (6), wherein a moulding press is provided with a ram (3) pressing stone briquettes (6) of a layer (5) in a pressing mould (2), wherein the stacker grab head (13) is vertically displaceable up and down while being guided by means of a spoke drive (16), wherein one layer of stone briquettes (6) is placed on top of the other for the stacking on a stacking platform (22) and with each layer the downwards spoke of the stacker grab head (13) is reduced by the depth of one layer, and wherein a measuring device (7, 8) is provided with respect to the current stack height, characterised in that a computer (10) adds up the successive layer depths to gain a current stack height and for each layer (5) to be deposited controls a height adjustment of the stacker grab head (13) in accordance with the total obtained for the stack height, and in that a travel measuring device (7, 8) is associated with the pressing ram (3, 4) in order to measure the layer depth in question and a feed (11) of the measured layer depths to the computer (10) is provided so that the totalled stack height is measured.

2. A stroke control device in accordance with Claim 1, wherein differing stacking platforms of the same kind are movable under the stacker grab head in succession, characterised in that a height measuring device (23) for the upper side of the stacking platform (22) is provided and is connected to the computer (10), and the computer control (28) is provided as a funtion of the total of the measured layer depths and the measured platform height.

3. A stroke control device in accordance with Claim 1 or 2, wherein motion of the stacker grab head in the vertical direction above the stack is provided, characterised in that the downwards motion and the vertical motion are superimposed to form a downwards inclined motion.

4. A stroke control device in accordance with Claim 1, 2 or 3, characterised in that a second travel measuring device (27) is associated with the stacker grab head (13) and the stroke drive (16) is provided with a device (26) for balancing the measured actual value from the second path measuring device (27) with the theoretical value indicated by the computer (10).

5. A stroke control device in accordance with any one of the preceding Claims, characterised in that the stroke drive (16) is an electric motor which acts via an articulated adjusting bar, such as a spindle, or a toothed bar upon the stacker grab head (13).

## Revendications

1. Système de commande de course pour la tête (13) de préhension d'un dispositif d'empilage pour des ébauches moulées (6), dans lequel il est prévu une presse de formage qui comprend un poinçon (3) qui presse dans un moule de pressage (2) les ébauches (6) d'un étage (5), la tête de préhension du dispositif d'empilage (13) pouvant être déplacée en montée et en descente en étant guidée au moyen d'un entraînement de levage (16); dans lequel, en vue de l'empilage sur une plate-forme d'empilement (22), on pose un étage d'ébauches (6) sur l'autre, et la course de descente de la tête de préhension du dispositif d'empilage (13) est plus faible à chaque étage de l'épaisseur d'un étage, et
dans lequel il est prévu un dispositif de mesure (7, 8) en relation avec la hauteur d'empilage respective,
caractérisé en ce que
un calculateur (10) ajoute les épaisseurs d'étage qui se suivent mutuellement pour former une hauteur d'empilage respective, et commande pour chaque étage à déposer (5) un réglage en hauteur de la saisie du dispositif d'empilage (13) en correspondance de la hauteur d'empilage additionnée, en ce qu'il est prévu un dispositif de mesure de course (7, 8), associé au poinçon de pressage (3, 4) pour la mesure de l'épaisseur d'étage respective, et en ce qu'il est prévu d'admettre (11) les épaisseurs d'étage mesurées au calculateur (10), de sorte que l'on mesure la hauteur d'empilage additionnée.

2. Système de commande de course selon la revendication 1, dans laquelle on peut amener sous la tête de préhension du dispositif d'empilage différentes plate-formes d'empilage de même type les unes après les autres, caractérisé en ce qu'il est prévu un dispositif de mesure de hauteur (23) pour la face supérieure de la plate-forme d'empilage (22), et en ce que ce dispositif est relié au calculateur (10), et en ce que la commande (28) du calculateur est prévue en fonction de la somme des épaisseurs d'étage mesurées et de la hauteur mesurée de la plate-forme.

3. Système de commande de course selon l'une ou l'autre des revendications 1 et 2, dans laquelle il est prévu un déplacement de la tête de préhension du dispositif d'empilage en direction verticale au-dessus de l'empilage, caractérisé en ce que le déplacement descendant et le déplacement vertical sont superposés en un déplacement qui s'étend en oblique vers le bas.

4. Système de commande de course selon l'une quelconque des revendications 1, 2 ou 3, caractérisé en ce qu'un second dispositif de mesure de course (27) est associé à la tête de préhension (13) du dispositif d'empilage, et en ce que l'entraînement de levage (16) est doté d'une égalisation (26) de la valeur réelle mesurée par le second dispositif de mesure de course (27) avec la valeur de consigne indiquée par le calculateur (10).

5. Système de commande de course selon l'une quelconque des revendications précédentes, caractérisé en ce que l'entraînement de levage (16) est un moteur électrique, qui attaque la tête de préhension (13) du dispositif d'empilage au moyen d'une tige de positionnement composite, telle qu'une broche ou une tige à crémaillère.
